# EUROPEAN PATENT APPLICATION

(11) **EP 4 082 903 A1**
(43) Date of publication of application: **02.11.2022**
(21) Application number: 20905449.3
(22) Date of filing: 18.12.2020
(51) Int. Cl.: B64C 27/14, F16H 57/04

(54) **HELICOPTER TRANSMISSION STRUCTURE**

(30) Priority: 26.12.2019 JP 2019236613
(71) Applicant: Kawasaki Jukogyo Kabushiki Kaisha, Hyogo 650-8670 (JP)
(72) Inventor: OGASAWARA, Kenta, Kobe-shi, 650.8670 Hyogo (JP); HAYASAKA, Akira, Kobe-shi, 650.8670 Hyogo (JP); YAMAMOTO, Hiroki, Kobe-shi, 650.8670 Hyogo (JP); ARISAWA, Hidenori, Kobe-shi, 650.8670 Hyogo (JP); SHINODA, Yuji, Kobe-shi, 650.8670 Hyogo (JP); TANAKA, Mitsuaki, Kobe-shi, 650.8670 Hyogo (JP); HASHIMOTO, Hironori, Kobe-shi, 650.8670 Hyogo (JP)
(74) Representative: Dantz, Jan Henning
(86) International application number: PCT/JP2020/047399
(87) International publication number: WO 2021/132069

(57) **Abstract**

A transmission structure of a helicopter according to one aspect is a transmission structure that transmits power from a prime mover to a rotary wing in the helicopter. The transmission structure includes: a housing; an input shaft that transmits the power of the prime mover to a gear arranged in the housing; a bearing supporting the input shaft in the housing such that the input shaft is rotatable, the bearing including an annular inner ring that holds the input shaft, an annular outer ring that is arranged outside the inner ring in a radial direction and fixed to the housing, and rolling elements sandwiched between the inner ring and the outer ring; and a sleeve that is sandwiched between an inner peripheral surface of the inner ring and the input shaft and is lower in heat conductivity than the inner ring and the input shaft.

## Description

### Technical Field

The present disclosure relates to a transmission structure of a helicopter.

### Background Art

A rotary wing of a helicopter rotates by power transmitted from a prime mover through a transmission. For example, PTL 1 discloses a transmission structure including: an input shaft (transmission shaft) attached inside a casing; and a large number of bearings supporting the input shaft inside the casing such that the input shaft is rotatable. Gears to which the power is transmitted from the input shaft and the bearings supporting the input shaft are supplied with lubricating oil.

### Citation List

### Patent Literature

PTL 1: Japanese Laid-Open Patent Application Publication No. 2007-8461

### Summary of Invention

### Technical Problem

The transmission of the helicopter is required to have continuous driving ability (hereinafter referred to as "dry-run performance") by which the transmission can continuously operate for a certain period of time even in an emergency in which the lubricating oil is not supplied to the transmission by a lubricating system in flight. In recent years, further improvement of the dry-run performance is required.

### Solution to Problem

A transmission structure of a helicopter according to one aspect of the present disclosure is a transmission structure that transmits power from a prime mover to a rotary wing in the helicopter. The transmission structure includes: a housing; an input shaft that transmits the power of the prime mover to a gear arranged in the housing; a bearing supporting the input shaft in the housing such that the input shaft is rotatable, the bearing including an annular inner ring that holds the input shaft, an annular outer ring that is arranged outside the inner ring in a radial direction and fixed to the housing, and rolling elements sandwiched between the inner ring and the outer ring; and a sleeve that is sandwiched between an inner peripheral surface of the inner ring and the input shaft and is lower in heat conductivity than the inner ring and the input shaft.

According to the above transmission structure, the sleeve that is low in heat conductivity is sandwiched between the inner peripheral surface of the inner ring and the input shaft. Therefore, heat generated at the input shaft due to the lack of the oil is prevented from being transmitted from the input shaft to the inner ring. With this, seizure of the bearing can be prevented by suppression of temperature increase of the bearing, and decrease of gaps inside the bearing can be suppressed by decrease of a temperature difference between the inner ring and the outer ring in the bearing. With this, damages of the bearing can be suppressed, and therefore, dry-run performance can be improved.

A transmission structure of a helicopter according to another aspect of the present disclosure is a transmission structure that transmits power from a prime mover to a rotary wing in the helicopter. The transmission structure includes: a housing; an input shaft that transmits the power of the prime mover to a gear arranged in the housing; a bearing supporting the input shaft in the housing such that the input shaft is rotatable, the bearing including an annular inner ring that holds the input shaft, an annular outer ring that is arranged outside the inner ring in a radial direction and fixed to the housing, and rolling elements sandwiched between the inner ring and the outer ring; and a support that is sandwiched between an outer peripheral surface of the outer ring and the housing and is lower in heat conductivity than the housing.

The heat generated at the input shaft due to the lack of the oil is transmitted to the outer ring through the input shaft, the inner ring, and the rolling elements. According to the transmission structure, the support that is low in heat conductivity is sandwiched between the outer peripheral surface of the outer ring and the housing. Therefore, the heat of the outer ring is prevented from being transmitted to the housing. With this, the temperature difference between the inner ring and the outer ring in the bearing can be reduced, and the decrease of the gaps inside the bearing can be suppressed. Thus, the damages of the bearing can be suppressed. Therefore, the dry-run performance can be improved.

### Advantageous Effects of Invention

According to one aspect of the present disclosure, dry-run performance in a transmission structure of a helicopter can be improved.

### Brief Description of Drawings

FIG. 1 is a schematic perspective view of a transmission of a helicopter according to Embodiment 1.
FIG. 2 is a diagram showing a transmission structure of the helicopter according to Embodiment 1.
FIG. 3 is a diagram showing the transmission structure of the helicopter according to Embodiment 2.
FIG. 4 is a diagram showing a modified example of the transmission structure according to Embodiment 2.

### Description of Embodiments

Hereinafter, a transmission of a helicopter according to an embodiment of the present disclosure will be described with reference to the drawings. For convenience sake, the concept of directions mentioned in the following description is based on an airframe of the helicopter. To be specific, the "front," "rear," "upper," "lower," "left," and "right" of the transmission respectively correspond to the "front," "rear," "upper," "lower," "left," and "right" of the airframe of the helicopter on which the transmission is mounted.

### Embodiment 1

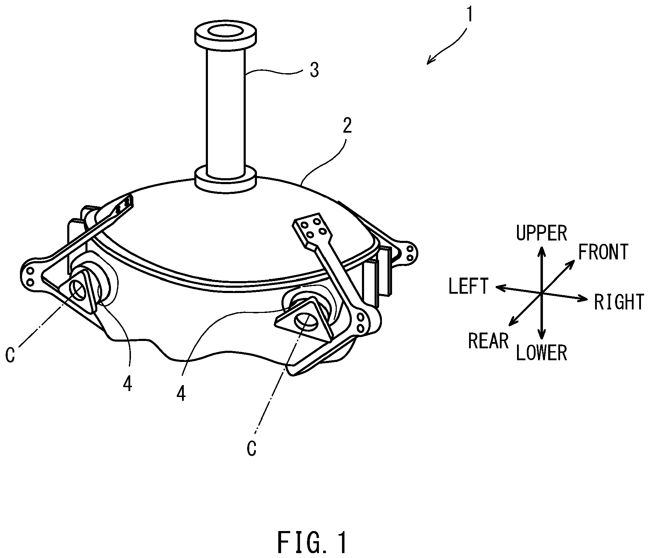

FIG. 1 is a schematic perspective view of a transmission 1 of the helicopter according to Embodiment 1. The transmission 1 transmits power to a rotary wing (not shown) from a prime mover (not shown) mounted on the helicopter. The transmission 1 is a gear box and includes a housing 2 that houses gears. The housing 2 is made of, for example, magnesium alloy. The prime mover is, for example, a turbine. The rotary wing is, for example, a main rotary wing that rotates at an upper portion of the airframe of the helicopter. The housing 2 supports a main shaft 3 extending in an upper-lower direction of the helicopter. The main rotary wing is attached to the main shaft 3.

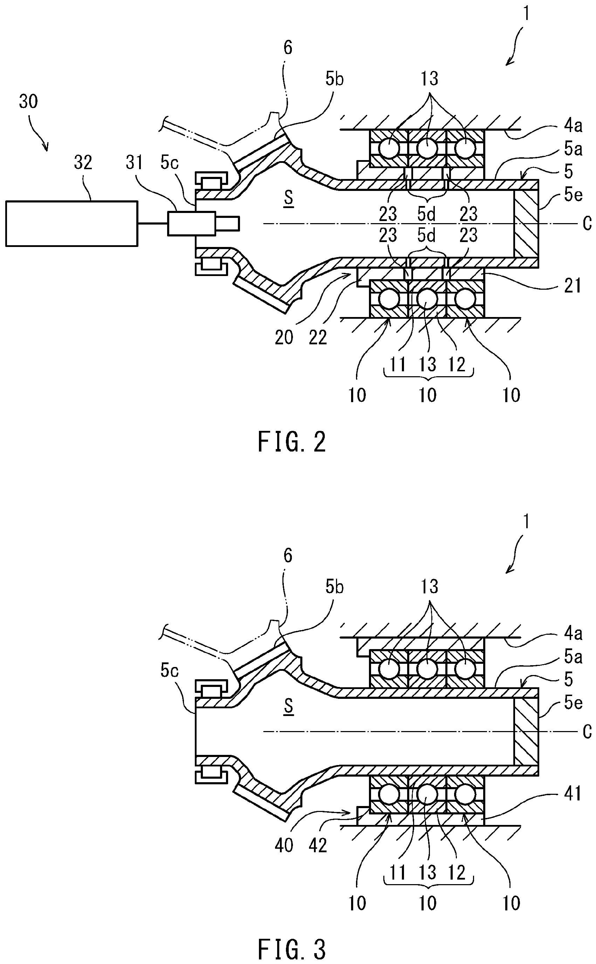

The housing 2 includes two insertion openings 4. The two insertion openings 4 are arranged at a rear portion of the housing 2 so as to be lined up in a left-right direction. Each of the insertion openings 4 includes a cylindrical inner peripheral surface 4a (see FIG. 2). In the present embodiment, central axes C of the two insertion openings 4 extend in substantially a front-rear direction and are substantially parallel to each other.

FIG. 2 is a diagram showing the structure of the transmission 1 of the helicopter according to Embodiment 1. FIG. 2 shows a section of the transmission 1 when a portion in the vicinity of the insertion opening 4 is cut along the central axis C of the insertion opening 4. An input shaft 5 is inserted into each insertion opening 4. An axis of the input shaft 5 coincides with the axis C of the insertion opening 4. The input shaft 5 includes a shaft portion 5a and a meshing portion 5b that meshes with a gear 6 arranged inside the housing 2. The input shaft 5 is connected through the meshing portion 5b to the gear 6 located inside the housing 2 and transmits the power of the prime mover to the gear 6 located inside the housing 2. The input shaft 5 is made of, for example, alloy steel.

The shaft portion 5a is located inside the inner peripheral surface 4a of the insertion opening 4 in a radial direction. The shaft portion 5a is supported by bearings 10 arranged on the inner peripheral surface 4a of the insertion opening 4. The meshing portion 5b is located at a front side of the shaft portion 5a. In the present embodiment, the gear 6 and the meshing portion 5b are bevel gears that mesh with each other. Rotational force of the gear 6 is transmitted to the main shaft 3.

In the present embodiment, the input shaft 5 is hollow. The input shaft 5 includes an internal space S. A front end of the input shaft 5 includes an opening portion 5c that opens the internal space S of the input shaft 5. The shaft portion 5a of the input shaft 5 includes ejection holes 5d through which the internal space S communicates with an outside. Each of the ejection holes 5d has, for example, a circular shape. The ejection holes 5d are directed toward the bearings 10.

The bearings 10 are arranged on the inner peripheral surface 4a of the insertion opening 4 so as to be lined up in a direction along the axis C of the insertion opening 4. The bearings 10 support the input shaft 5 such that the input shaft 5 is rotatable. The bearings 10 are made of, for example, iron. Each of the bearings 10 includes: an annular inner ring 11; an annular outer ring 12 arranged outside the inner ring 11 in the radial direction; and rolling elements 13 sandwiched between the inner ring 11 and the outer ring 12. The annular outer rings 12 are fixed to the housing 2. Outer peripheral surfaces of the outer rings 12 are in contact with the inner peripheral surface 4a of the insertion opening 4. Each of the rolling elements 13 is a sphere. To be specific, in the present embodiment, the bearings 10 are ball bearings. However, the bearings 10 may be bearings of other types, such as roller bearings.

The inner rings 11 support the input shaft 5. In the present embodiment, the inner rings 11 are not in contact with the input shaft 5. Specifically, a sleeve 20 is sandwiched between inner peripheral surfaces of the inner rings 11 and an outer peripheral surface of the shaft portion 5a of the input shaft 5 in the radial direction.

The sleeve 20 includes a cylindrical portion 21 and a projecting portion 22. An inner peripheral surface of the cylindrical portion 21 is in contact with the outer peripheral surface of the shaft portion 5a of the input shaft 5, and an outer peripheral surface of the cylindrical portion 21 is in contact with the inner peripheral surfaces of the inner rings 11 of the bearings 10. The projecting portion 22 is located at a front end portion (end portion located closer to a middle side of the housing 2) of the cylindrical portion 21 and projects outward in the radial direction. For example, the projecting portion 22 extends in a circumferential direction of the cylindrical portion 21 and has an annular shape. The projecting portion 22 is in contact with a front end surface of the inner ring 11 of the bearing 10 located at a frontmost side (middle side of the housing 2) among the bearings 10. With this, the positioning between the bearings 10 and the sleeve 20 in the direction along the axis C is facilitated.

The sleeve 20 is lower in heat conductivity than the inner rings 11 and the input shaft 5. In the present embodiment, the sleeve 20 is made of resin. Resin having high heat resistance and high abrasion resistance is adopted as a raw material of the sleeve 20. The cylindrical portion 21 and the projecting portion 22 are integrally formed.

The sleeve 20 includes openings 23 at positions corresponding to the ejection holes 5d in an axial direction of the input shaft 5 and a circumferential direction of the axis of the input shaft 5. The openings 23 are located at the cylindrical portion 21 of the sleeve 20. In the present embodiment, the lubricating oil is supplied to the bearings 10 through the openings 23. The opening 23 is slightly larger than the ejection hole 5d such that the ejection hole 5d is contained within the opening 23 when viewed from an axial direction of the ejection hole 5d.

Specifically, since the transmission 1 needs to be appropriately lubricated by a lubricating liquid during the operation, the helicopter includes a transmission lubricator 30. Adopted in the present embodiment is an oil supply method of supplying the lubricating oil to the bearings 10 by centrifugal force generated by the rotation of the input shaft 5, i.e., so-called centrifugal lubrication. The transmission lubricator 30 includes: a nozzle 31 that injects the lubricating oil into the internal space S of the input shaft 5; and an oil supply device 32 that supplies the lubricating oil to the nozzle 31. The nozzle 31 injects the lubricating liquid into the internal space S of the input shaft 5 through the opening portion 5c of the input shaft 5. For example, the oil supply device 32 includes: an oil sump (not shown) that stores the lubricating oil in the housing 2; and a pump that pressure-feeds the lubricating oil stored in the oil sump to the nozzle.

A plug 5e that closes the internal space S of the input shaft 5 is disposed at a portion of the input shaft 5 which portion is located at a rear side of the shaft portion 5a. Instead of the plug 5e, a plate including a hole that delays the discharge of the lubricating oil may be disposed at a rear end of the input shaft 5. The lubricating liquid stored in the internal space S of the input shaft 5 by the transmission lubricator 30 lubricates the bearings 10 by being ejected from the ejection holes 5d through the openings 23 to an outside by the centrifugal force generated by the rotation of the input shaft 5.

In the present embodiment, the opening 23 is slightly larger than the ejection hole 5d such that the lubricating oil ejected from the ejection hole 5d surely passes through the opening 23. For example, when viewed from an extending direction of the opening 23, the opening 23 contains the ejection hole 5d. Therefore, some positioning errors between the input shaft 5 and the sleeve 20 in the axial direction of the input shaft 5 and/or the circumferential direction of the axis of the input shaft 5 are absorbed. In the present embodiment, the opening 23 is larger than the ejection hole 5d (for example, the opening 23 has a circular-arc, elongated shape that is long in the circumferential direction). Therefore, when assembling the sleeve 20 to the input shaft 5, some positioning errors in the circumferential direction are absorbed. However, the opening 23 may be the same in shape and size as the ejection hole 5d.

As described above, a transmission structure of the helicopter according to the present embodiment includes the sleeve 20 that is sandwiched between the inner peripheral surfaces of the inner rings 11 and the input shaft 5 and is lower in heat conductivity than the inner rings 11 and the input shaft 5. In the present embodiment, by the sleeve 20 sandwiched between the inner peripheral surfaces of the inner rings 11 and the input shaft 5, heat generated at the meshing portion 5b of the input shaft 5 due to the lack of the oil (lubricating oil) is prevented from being transmitted from the input shaft 5 to the inner rings 11. With this, seizure of the bearings 10 can be prevented by suppression of temperature increase of the bearings 10, and decrease of gaps inside the bearings 10 can be suppressed by decrease of temperature differences between the inner rings 11 and the outer rings 12 in the bearings 10. With this, damages of the bearings 10 can be suppressed, and therefore, dry-run performance can be improved.

Moreover, in the present embodiment, the sleeve 20 includes the openings at positions corresponding to the ejection holes 5d in the axial direction of the input shaft 5 and the circumferential direction of the axis of the input shaft 5. Therefore, the lubricating oil can be supplied to the bearings 10 by utilizing the centrifugal force of the input shaft 5 while securing certain frictional force between the sleeve 20 and the input shaft 5.

In the present embodiment, as the method of supplying the lubricating oil to the bearings 10, the oil supply method of supplying the lubricating oil to the bearings 10 by the centrifugal force generated by the rotation of the input shaft 5 is described, i.e., the so-called centrifugal lubrication method is described. However, for example, the lubricating oil may be supplied to the bearings 10 by another method, such as a method of supplying the lubricating oil to the bearings 10 from a nozzle (not shown) disposed outside the input shaft 5. In this case, the input shaft 5 does not have to include the ejection holes 5d, and the sleeve 20 does not have to include the openings 23.

### Embodiment 2

Next, the transmission structure of the helicopter according to Embodiment 2 will be described with reference to FIG. 3. Components of the present embodiment which are different from the components of Embodiment 1 will be mainly described, and explanations of components of the present embodiment which are common to the components of Embodiment 1 are omitted.

The present embodiment is different from Embodiment 1 in that instead of the sleeve 20 sandwiched between the inner peripheral surfaces of the inner rings 11 and the outer peripheral surface of the shaft portion 5a of the input shaft 5, a support 40 is sandwiched between the outer peripheral surfaces of the outer rings 12 and the housing 2.

The inner rings 11 are in contact with the input shaft 5. Specifically, the inner peripheral surfaces of the inner rings 11 of the bearings 10 are in contact with the outer peripheral surface of the shaft portion 5a of the input shaft 5.

The support 40 includes a cylindrical portion 41 and a projecting portion 42. An inner peripheral surface of the cylindrical portion 41 is in contact with the outer peripheral surfaces of the outer rings 12 of the bearings 10, and an outer peripheral surface of the cylindrical portion 41 is in contact with the inner peripheral surface 4a of the insertion opening 4. The projecting portion 42 is located at a front end portion (end portion located closer to the middle side of the housing 2) of the cylindrical portion 41 and projects inward in the radial direction. For example, the projecting portion 42 extends in a circumferential direction of the cylindrical portion 41 and has an annular shape. The projecting portion 42 is in contact with a front end surface of the outer ring 12 of the bearing 10 located at a frontmost side (middle side of the housing 2) among the bearings 10. With this, the positioning between the bearings 10 and the support 40 in the direction along the axis C is facilitated.

The support 40 is lower in heat conductivity than the housing 2 made of magnesium alloy. In the present embodiment, the support 40 is made of resin. Resin having high heat resistance and high abrasion resistance is adopted as a raw material of the support 40. The cylindrical portion 41 and the projecting portion 42 are integrally formed.

In the present embodiment, as the method of supplying the lubricating oil to the bearings 10, the centrifugal lubrication method described in Embodiment 1 is not adopted, but the lubricating oil is supplied to the bearings 10 from a nozzle (not shown) disposed outside the input shaft 5. Therefore, the input shaft 5 does not include the ejection holes 5d. However, in the present embodiment, the centrifugal lubrication may be adopted as with Embodiment 1. In this case, the shaft portion 5a of the input shaft 5 includes the ejection holes 5d.

The heat generated at the meshing portion 5b of the input shaft 5 due to the lack of the oil is transmitted to the outer rings 12 through the input shaft 5, the inner rings 11, and the rolling elements 13. According to the transmission structure of the present embodiment, since the support 40 having low heat conductivity is sandwiched between the outer peripheral surfaces of the outer rings 12 and the housing 2, the heat of the outer rings 12 is prevented from being transmitted to the housing 2. With this, the temperature difference between the inner ring 11 and the outer ring 12 in the bearing 10 can be reduced, and the decrease of the gaps inside the bearings 10 can be suppressed. Thus, the damages of the bearings 10 can be suppressed. Therefore, the dry-run performance can be improved.

### Modified Example

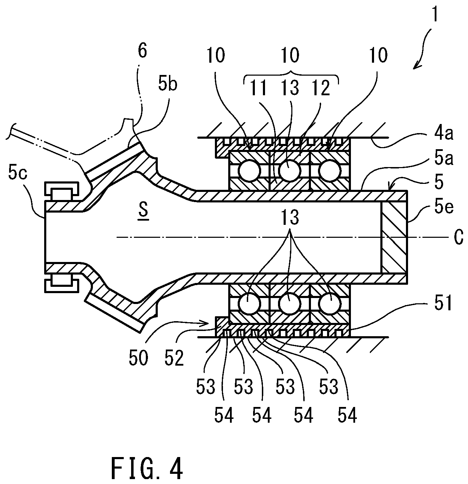

FIG. 4 is a diagram showing a modified example of the transmission structure according to Embodiment 2. Components of the present modified example which are different from the components of Embodiment 2 will be mainly described, and explanations of components of the present modified example which are common to the components of Embodiment 2 are omitted.

In this modified example, a support 50 sandwiched between the outer peripheral surfaces of the outer rings 12 and the housing 2 includes contact portions 53 that are arranged at intervals in the axial direction of the input shaft 5 and are in contact with the outer peripheral surfaces of the outer rings 12 such that air layers facing the outer peripheral surfaces of the outer rings 12 are formed.

Specifically, the support 50 includes a cylindrical portion 51 and a projecting portion 52. The cylindrical portion 51 and the projecting portion 52 are respectively the same in configuration as the cylindrical portion 41 and the projecting portion 42 of the support 40, but the shape of the outer peripheral surface of the cylindrical portion 51 is different from the shape of the outer peripheral surface of the cylindrical portion 41. Annular grooves 54 are located on the outer surface of the cylindrical portion 51 so as to be lined up at intervals in the axial direction of the input shaft 5. To be specific, the contact portions 53 and the grooves 54 are alternately lined up in the axial direction of the input shaft 5 on the outer peripheral surface of the cylindrical portion 51. With this, the outer peripheral surface of the cylindrical portion 51 is not entirely but partially in contact with the inner peripheral surface 4a of the insertion opening 4.

Spaces surrounded by the grooves 54 and the outer peripheral surfaces of the outer rings 12 are the air layers. Since air is lower in heat conductivity than resin, transmitting the heat of the outer rings 12 to the housing 2 can be further suppressed as compared to Embodiment 2. Moreover, since the support 50 includes the grooves 54, the weight of the support 50 can be made smaller than Embodiment 2, and therefore, the weight of the transmission 1 can be reduced.

### Other Embodiments

The present disclosure is not limited to the above embodiments, and modifications, additions, and eliminations may be made with respect to the configurations of the embodiments.

For example, the transmission structure of the helicopter of the present disclosure may transmit power to a tail rotary wing instead of the main rotary wing. Moreover, the number of insertion openings of the housing does not have to be two and may be one or three or more. Furthermore, the insertion openings may be arranged at a portion other than the rear portion of the housing.

Each of the centrifugal lubrication method and the method of supplying the lubricating oil from the nozzle disposed outside the input shaft may be applied to Embodiment 1, Embodiment 2, and the modified example.

The directions along the center axes of the insertion openings and the direction along the center axis of the input shaft are not limited to those described in the above embodiments.

The transmission structure of the present disclosure may include both the sleeve sandwiched between the inner peripheral surfaces of the inner rings and the input shaft and the support sandwiched between the outer peripheral surfaces of the outer rings and the housing.

The sleeve does not have to be made of resin and may be made of another material that is lower in heat conductivity than the inner rings and the input shaft. The support does not have to be made of resin and may be made of another material that is lower in heat conductivity than the housing. In the above embodiments, the housing 2 is made of magnesium alloy, and the input shaft 5 and the bearings 10 are made of alloy steel. However, the present disclosure is not limited to these.

For example, one or both of the sleeve and the support may be made of metal (such as titanium) that is lower in heat conductivity than iron. It is preferable that one or both of the sleeve and the support be made of resin since the sleeve and the support which are made of resin can be made further lower in heat conductivity than the sleeve and the support which are made of metal, such as titanium, which is low in heat conductivity.

For example, when the housing includes: a housing main body that houses gears; and a cylindrical liner member fixed to the housing main body and including an insertion opening into which the input shaft is inserted, the housing main body and the liner member may be made of respective materials that are different from each other. In this case, the support of the present disclosure may be made of a material that is lower in heat conductivity than at least the liner member of the housing.

The shape of the sleeve is not limited to the shape described in the above embodiment. For example, in Embodiment 1, the projecting portion 22 of the sleeve 20 extends in the circumferential direction of the cylindrical portion 21 and has an annular shape. However, the projecting portion 22 may be comprised of protruding portions that are arranged at fixed intervals in the circumferential direction and protrude outward in the radial direction. The sleeve 20 does not have to include the projecting portion 22.

The shape of the support is not limited to the shape described in the above embodiment. For example, in Embodiment 2, the projecting portion 42 of the support 40 extends in the circumferential direction of the cylindrical portion 41 and has an annular shape. However, the projecting portion 42 may be comprised of protruding portions that are arranged at fixed intervals in the circumferential direction and protrude inward in the radial direction. The support 40 does not have to include the projecting portion 42.

Moreover, for example, in the modified example of Embodiment 2, the support 50 may include contact portions that are arranged at intervals in not the axial direction of the input shaft 5 but the circumferential direction of the axis of the input shaft 5 and are in contact with the outer peripheral surfaces of the outer rings. Mesh-shaped grooves may be formed on the outer peripheral surface of the cylindrical portion 51 of the support 50. Moreover, the entire cylindrical portion 51 of the support 50 may have a mesh structure.

### Reference Signs List

- 1: transmission
- 2: housing
- 5: input shaft
- 5b: meshing portion
- 6: gear
- 10: bearing
- 11: inner ring
- 12: outer ring
- 13: rolling element
- 20: sleeve
- 40, 50: support
- 43, 53: contact portion

## Claims

1. A transmission structure of a helicopter, the transmission structure transmitting power from a prime mover to a rotary wing in the helicopter,
the transmission structure comprising:
a housing;
an input shaft that transmits the power of the prime mover to a gear arranged in the housing;
a bearing supporting the input shaft in the housing such that the input shaft is rotatable, the bearing including
an annular inner ring that holds the input shaft,
an annular outer ring that is arranged outside the inner ring in a radial direction and fixed to the housing, and
rolling elements sandwiched between the inner ring and the outer ring; and
a sleeve that is sandwiched between an inner peripheral surface of the inner ring and the input shaft and is lower in heat conductivity than the inner ring and the input shaft.

2. The transmission structure according to claim 1, further comprising a support that is sandwiched between an outer peripheral surface of the outer ring and the housing and is lower in heat conductivity than the housing.

3. The transmission structure according to claim 1 or 2, wherein the sleeve is made of resin.

4. A transmission structure of a helicopter, the transmission structure transmitting power from a prime mover to a rotary wing in the helicopter,
the transmission structure comprising:
a housing;
an input shaft that transmits the power of the prime mover to a gear arranged in the housing;
a bearing supporting the input shaft in the housing such that the input shaft is rotatable, the bearing including
an annular inner ring that holds the input shaft,
an annular outer ring that is arranged outside the inner ring in a radial direction and fixed to the housing, and
rolling elements sandwiched between the inner ring and the outer ring; and
a support that is sandwiched between an outer peripheral surface of the outer ring and the housing and is lower in heat conductivity than the housing.

5. The transmission structure according to claim 4, further comprising a sleeve that is sandwiched between an inner peripheral surface of the inner ring and the input shaft and is lower in heat conductivity than the inner ring and the input shaft.

6. The transmission structure according to claim 4 or 5, wherein the support is made of resin.

7. The transmission structure according to any one of claims 4 to 6, wherein the support includes contact portions that are arranged at intervals in an axial direction of the input shaft or a circumferential direction of an axis of the input shaft and are in contact with the outer peripheral surface of the outer ring such that at least one air layer facing the outer peripheral surface of the outer ring is formed.
